# EUROPÄISCHE PATENTSCHRIFT

(11) **EP 3 093 204 B1**
(45) Veröffentlichungstag und Bekanntmachung des Hinweises auf die Patenterteilung: **23.10.2019**
(21) Anmeldenummer: 15167262.3
(22) Anmeldetag: 12.05.2015
(51) Int. Cl.: B60T 3/00, B60T 17/04

(54) **SYSTEM UND VERFAHREN ZUM FIXIEREN EINES STEHENDEN ANHÄNGERS FÜR EINE ZUGMASCHINE**
SYSTEM AND METHOD FOR FIXING A STATIONARY TRAILER FOR A TRACTOR
SYSTÈME ET PROCÉDÉ DE FIXATION D'UNE REMORQUE POUR UNE MACHINE DE TRACTION

(43) Veröffentlichungstag der Anmeldung: 16.11.2016
(73) Patentinhaber: Covestro Deutschland AG, 51373 Leverkusen (DE)
(72) Erfinder: Zejneli, Ramadan, 41540 Dormagen (DE); Vieler, Robert, 41542 Dormagen (DE); Dorn, Hermann, 50259 Pulheim (DE)
(74) Vertreter: Levpat

(56) Entgegenhaltungen:
- WO-A2-03/039924
- AU-A1- 2012 200 062
- GB-A- 2 402 451
- US-A- 4 226 103
- US-A- 4 614 357
- US-A- 4 747 623
- US-A- 5 410 894
- US-A1- 2001 050 509
- US-A1- 2003 132 663
- US-A1- 2004 099 463
- US-B1- 8 052 172
- US-B1- 8 376 472

## Beschreibung

Die vorliegende Erfindung betrifft ein System zum Fixieren eines stehenden Anhängers für eine Zugmaschine mit einem Kupplungskopf zur Verbindung einer nicht mit der Zugmaschine verbundenen Druckmittelleitung mit einem Gegenkupplungskopf einer Betriebsbremsleitung des Anhängers. Sie betrifft ebenfalls ein Verfahren zum Fixieren eines stehenden Anhängers für eine Zugmaschine, wobei der Anhänger eine durch Beaufschlagen mit einem Druckmittel wirkende Betriebsbremse aufweist, die Betriebsbremse mit einer Betriebsbremsleitung verbunden ist und die Betriebsbremsleitung einen Gegenkupplungskopf zur Aufnahme eines Kupplungskopfes aufweist. Anhänger für Zugmaschinen, insbesondere Anhänger für Lastkraftwagen, werden in großem Umfang zum Transport von Gütern eingesetzt. Insbesondere sind hierbei Auflieger für Sattelzugmaschinen zu nennen.

Das Bremssystem von Anhängern wird beispielsweise in der WO 2010/091843 A1 angesprochen. Diese Patentanmeldung betrifft ein Druckluftversorgungssystem für Lastkraftwagenanhänger aufweisend: zumindest ein erstes Druckluftnetz, das eine pneumatische Bremsanlage des Lastkraftwagenanhängers mit einem gemäß EU-weiter gesetzlicher Bestimmungen begrenzten Luftdruck versorgt, mindestens eine Druckluftversorgungskupplung zwischen Zugfahrzeug und dem Lastkraftwagenanhänger zur Druckluftversorgung, wobei die mindestens eine Druckluftversorgungskupplung für einen höheren Luftdruck ausgelegt ist als der begrenzte Luftdruck gemäß der EU-weiten gesetzlichen Bestimmungen.

Weitere derartige Systeme für Anhänger sind aus den US 2001/050509 A1, US 4 747 623 A, US 4 226 103 A, US 8 052 172 B1, US 5 410 894 A und US 8 376 472 B1 bekannt. Beim Be- und Entladen des Anhängers muss dieser fixiert werden, da ein Wegrollen des Anhängers die Gefahr von Unfällen und von Beschädigungen an einer Abfüllanlage mit sich bringt. Wenn zum Be- oder Entladen die Zugmaschine vom Anhänger abgekoppelt wird, wurde in der bisherigen Praxis der Anhänger durch Wegfahrsperren in Form von Unterlegkeilen immobilisiert.

Unterlegkeile stellen eine einfache mechanische Sperre dar. Trotz solcher Keile kann ein Anhänger in ungünstigen Fällen bis zu einer halben Radumdrehung bewegt werden. Dieses reicht teilweise aus, um Ladebühnen oder Hebekörbe zu beschädigen oder schlimmstenfalls eine Produktleitung abzureißen. Andererseits ist ein Justieren der Keile schwierig, wenn das Gewicht des Anhängers bereits auf ihnen lastet. Ein weiterer Nachteil ist die arbeitsergonomisch ungünstige Handhabung solcher Keile, die ein nicht unerhebliches Gewicht mit sich bringen. Schließlich ist der Ersatz von verschlissenen Keilen regelmäßig mit Kosten für den Betrieb verbunden.

Die vorliegende Erfindung hat sich die Aufgabe gestellt, eine Möglichkeit zum sicheren Immobilisieren eines eine Betriebsbremse aufweisenden Anhängers bereitzustellen, welche sicherer und ergonomischerer ist als die bisher benutzten Unterlegkeile.

Die Aufgabe wird durch ein System gemäß Anspruch 1, ein Verfahren gemäß Anspruch 8 beziehungsweise die Verwendung gemäß Anspruch 10, gelöst. Vorteilhafte Weiterbildungen sind in den Unteransprüchen angegeben.

Erfindungsgemäß gelöst wird diese Aufgabe folglich zunächst durch ein System zum Fixieren eines stehenden Anhängers für eine Zugmaschine, wobei das System umfasst:
- einen Kupplungskopf zur Verbindung einer nicht mit der Zugmaschine verbundenen Druckmittelleitung mit einem Gegenkupplungskopf einer Betriebsbremsleitung des Anhängers;
   und
- eine Blockiereinrichtung zum verliersicheren Blockieren des Kupplungskopfes mit dem Gegenkupplungskopf.

Der zu fixierende oder zu immobilisierende stehende Anhänger, für den das erfindungsgemäße System vorgesehen ist, kann insbesondere ein Auflieger für einen Sattelschlepper (Sattelauflieger) sein. Demensprechend handelt es sich bei der angesprochenen Zugmaschine um eine Sattelzugmaschine.

Der Anhänger weist eine durch Beaufschlagen mit einem Druckmittel wirkende Betriebsbremse auf. Die Betriebsbremse ist mit der Betriebsbremsleitung verbunden und die fluidische Betriebsbremsleitung weist einen Gegenkupplungskopf zur Aufnahme eines Kupplungskopfes auf. Beim Druckmittel handelt es sich vorzugsweise um Druckluft oder ein anderes unter Druck stehendes Gas, so dass beim Anhänger von einer pneumatischen Betriebsbremse gesprochen werden kann. Es ist jedoch auch möglich, dass das Druckmittel eine Flüssigkeit ist, so dass der Anhänger eine hydraulische Betriebsbremse aufweist.

Vorzugsweise entspricht die Bremsanlage des Anhängers der Norm ISO 1728 ("Straßenfahrzeuge - Druckluftbremsverbindungen zwischen Kraftfahrzeugen und Anhängefahrzeugen - Austauschbarkeit"). Demzufolge ist es vorteilhaft, wenn der Kupplungskopf des erfindungsgemäßen Systems auch der Norm ISO 1728 entspricht. Geeignete Kupplungsköpfe werden beispielsweise von der Firma WABCO hergestellt.

Der Kupplungskopf dient zur Verbindung einer nicht mit der Zugmaschine verbundenen Druckmittelleitung. Dieses bedeutet, dass es sich um eine externe Druckmittelleitung und gerade nicht um die Druckmittelleitung (insbesondere Bremsdruckluftleitung) handelt, welche von der Zugmaschine zur Verfügung gestellt wird und während des Fahrens mit der Betriebsbremsleitung des Anhängers verbunden wird. Die externe Druckmittelleitung kann beispielsweise eine Druckluftleitung sein, wie sie ohnehin für vielfältige Funktionen an einer Abfüllstation bereitgestellt wird. Die Zugmaschine kann dabei vom Anhänger abgekoppelt und an anderer Stelle eingesetzt werden.

Ein weiterer Teil des erfindungsgemäßen Systems ist eine Blockiereinrichtung. Wenn der Kupplungskopf des Systems an den Gegenkupplungskopf der Betriebsbremsleitung des Anhängers zur Herstellung einer fluidischen Verbindung angekoppelt ist, verhindert die Blockiereinrichtung das ungewollte Trennen der Verbindung. Dieses erhöht die Arbeitssicherheit beim Be- oder Entladen des Anhängers.

Wenn, wie im Zusammenhang mit dem erfindungsgemäßen Verfahren ebenfalls beschrieben werden wird, durch das erfindungsgemäße System eine externe Druckmittelleitung mit der Betriebsbremsleitung des Anhängers verbunden wird, kann durch den Druck des Druckmittels in der Druckmittelleitung die Betriebsbremse des Anhängers aktiviert werden. Versuche durch die Erfinder haben ergeben, dass sich der so fixierte Anhänger nicht einmal um einen Zentimeter bewegen lässt.

In einer Ausführungsform des erfindungsgemäßen Systems ist der Kupplungskopf mit einer nicht mit der Zugmaschine verbundenen Druckmittelleitung verbunden. Auf diese Weise kann das System einsatzbereit an einer Be- und Entladestation bereitgestellt werden.

In einer weiteren Ausführungsform des erfindungsgemäßen Systems ist die Druckmittelleitung eine Druckluftleitung.

In einer weiteren Ausführungsform des erfindungsgemäßen Systems umfasst dieses weiterhin ein mit dem Kupplungskopf verbundenes Rückschlagventil, welches zur Aufnahme der nicht mit der Zugmaschine verbundenen Druckmittelleitung eingerichtet ist. Das Rückschlagventil verhindert das Entweichen von in der Betriebsbremsleitung des Anhängers vorliegendem Fluid, wenn das System eingesetzt wird. Dieses erhöht auch die Arbeitssicherheit beim Be- und Entladen des Anhängers.

In einer weiteren Ausführungsform des erfindungsgemäßen Systems ist die Blockiereinrichtung abnehmbar ausgestaltet. Mit eingeschlossen ist hierbei der Fall, dass die Blockiereinrichtung mit einer Kette oder dergleichen am Kupplungskopf befestigt ist. Wenn die Blockiereinrichtung abnehmbar ist, gestaltet sich das Anbringen der Blockiereinrichtung auf miteinander verbundene Kupplungsköpfe/Gegenkupplungsköpfe leichter.

In einer weiteren Ausführungsform des erfindungsgemäßen Systems ist die Blockiereinrichtung mit dem System verschließbar ausgestaltet. Auf diese Weise kann der Anhänger gegen ungewolltes Entfernen gesichert werden. Solange durch das System die Betriebsbremse des Anhängers aktiviert ist und die Blockiereinrichtung abgeschlossen ist, kann das System nicht abgenommen werden und der Anhänger nicht bewegt werden.

Vorzugsweise wird die Verschließbarkeit so realisiert, dass ein Gegenstück, beispielsweise ein L-förmiges Gegenstück, mit dem Kupplungskopf verbunden wird. Zweckmäßigerweise kann es mit aufgeschraubt werden, wenn an den Kupplungskopf die Druckmittelleitung angeschlossen wird. In der Blockiereinrichtung ist eine Aussparung, durch die ein Abschnitt des Gegenstücks hindurchragt. In diesem Abschnitt ist eine Aussparung vorgesehen, deren Ort so gewählt ist, dass sie beim Durchstecken des Gegenstücks durch die Blockiereinrichtung auf der dem Kupplungskopf abgewandten Seite des Kupplungskopfes liegt. Durch diese Aussparung können dann ein Stift, der Bügel eines Vorhängeschlosses, etc. zum Verriegeln geführt werden.

In einer weiteren Ausführungsform des erfindungsgemäßen Verfahrens ist der Kupplungskopf eingerichtet, um durch Drehung um eine Drehachse mit dem Gegenkupplungskopf verbunden zu werden und wobei die Blockiereinrichtung senkrecht zu dieser Drehachse den Kupplungskopf C-förmig umgibt. Solche Kupplungsköpfe und Gegenkupplungsköpfe sind beispielsweise die handelsüblichen WABCO-Kupplungsköpfe gemäß ISO 1728. Durch das C-förmige Umgeben wird die Blockiereinrichtung beim Losdrehen des Kupplungskopfes mitbewegt. Ab einem bestimmten Drehwinkel ist ein Weiterdrehen nicht möglich, da die Blockiereinrichtung gegen Kupplungskopf, Gegenkupplungskopf oder andere Teile des Anhängers stößt. Die C-förmige Form der Blockiereinrichtung ermöglicht ferner ein seitliches Aufsetzen auf die Anordnung von Kupplungskopf und Gegenkupplungskopf.

Ein weiterer Gegenstand der Erfindung ist ein Verfahren zum Fixieren eines stehenden Anhängers für eine Zugmaschine,
wobei der Anhänger eine durch Beaufschlagen mit einem Druckmittel wirkende Betriebsbremse aufweist,
   die Betriebsbremse mit einer Betriebsbremsleitung verbunden ist und
   die Betriebsbremsleitung einen Gegenkupplungskopf zur Aufnahme eines Kupplungskopfes aufweist,
wobei das Verfahren die Schritte umfasst:
   A) Verbinden einer Druckmittelleitung mit der Betriebsbremsleitung des Anhängers,
      wobei das Verbinden durch Ankoppeln eines mit der Druckmittelleitung verbundenen Kupplungskopfes an den Gegenkupplungskopf der Betriebsbremsleitung erfolgt und
      wobei die Druckmittelleitung nicht mit der Zugmaschine verbunden ist;
   B) Beaufschlagen der Betriebsbremsleitung mit einem unter Druck stehenden Fluid, indem das unter Druck stehende Fluid über die Druckmittelleitung auf die Betriebsbremsleitung einwirkt,
wobei der Druck derart gewählt wird, dass die Betriebsbremse des Anhängers aktiviert wird.

Hinsichtlich der Definition einzelner Merkmale, die im erfindungsgemäßen Verfahren erwähnt werden, wird zur Vermeidung unnötiger Wiederholungen auf die Ausführungen zum erfindungsgemäßen System verwiesen. Vorzugsweise wird das erfindungsgemäße Verfahren bei Aufliegern für Sattelzugmaschinen angewandt, welche über eine pneumatische Betriebsbremse verfügen.

An den Schritt B) schließt sich in der Regel das Beladen oder Entladen des Anhängers an, obwohl der Anhänger selbstverständlich auch zu Inspektionszwecken, Wartungszwecken und dergleichen fixiert werden kann.

Vorzugsweise wird im erfindungsgemäßen Verfahren ein erfindungsgemäßes System zumindest für die Schritte A) und B) eingesetzt.

Die vorliegende Erfindung betrifft ferner die Verwendung eines erfindungsgemäßen Systems zum Fixieren eines stehenden Anhängers für eine Zugmaschine.

Die vorliegende Erfindung wird anhand der nachfolgenden Figuren näher erläutert, ohne jedoch darauf beschränkt zu sein. Es zeigen:
FIG. 1 ein erfindungsgemäßes System in Komponentendarstellung
FIG. 2 ein erfindungsgemäßes System
FIG. 3 ein erfindungsgemäßes System, welches mit einem Gegenkupplungskopf verbunden ist

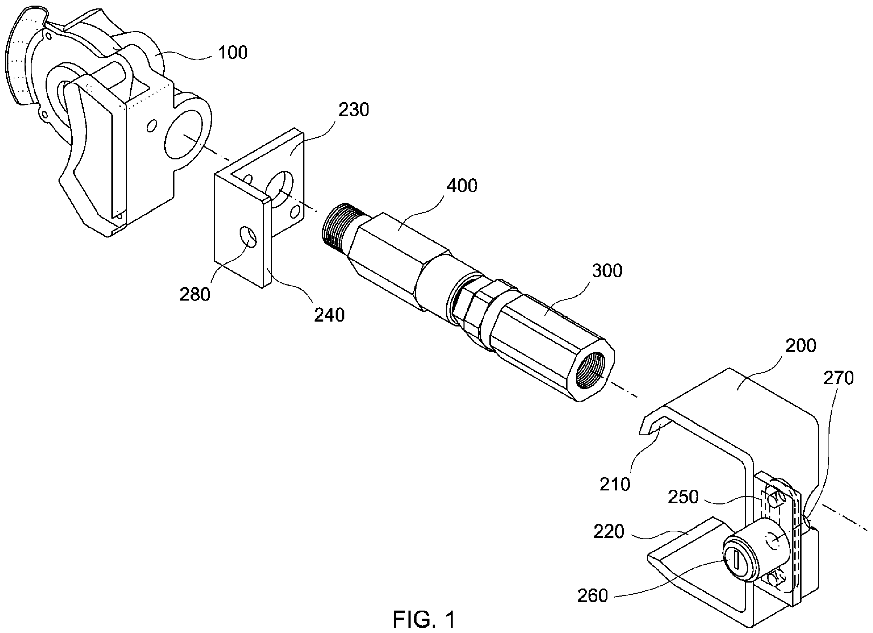

FIG. 1 zeigt ein erfindungsgemäßes System in der Darstellung seiner einzelnen Komponenten. An einen Kupplungskopf 100, wie er als WABCO-Kupplungskopf gemäß ISO 1728 erhältlich ist, wird das L-förmige Gegenstück 230 für die Schließvorrichtung des Systems mittels eines Verlängerungsstücks 400 angeschraubt. Das entsprechende Innengewinde der Öffnung des Kupplungskopfes ist in der Zeichnung nicht dargestellt. Auf das Verlängerungsstück 400 ist ein Rückschlagventil 300 aufgeschraubt. Das freie, in der Zeichnung rechts liegende Gewinde des Rückschlagventils 300 dient zur Verbindung mit einer Druckluftleitung.

Eine weitere Komponente des erfindungsgemäßen Systems ist die Blockiereinrichtung 200. Im vorliegenden Fall ist sie C-förmig ausgebildet und umgibt im montierten Zustand mit ihren oberen und unteren Enden 210, 220 den Kupplungskopf 100 C-förmig. Die Blockiereinrichtung 200 weist in ihrer dem Kupplungskopf 100 gegenüberliegenden Seite eine Öffnung 250 auf, durch welche im montierten Zustand der vordere Abschnitt 240 des Gegenstücks 230 hindurchragt. Die Blockiereinrichtung 200 wird dadurch abgeschlossen, dass der Zapfen 270 des Schlosses 260 in die Öffnung 280 des Gegenstücks 230 eingreift.

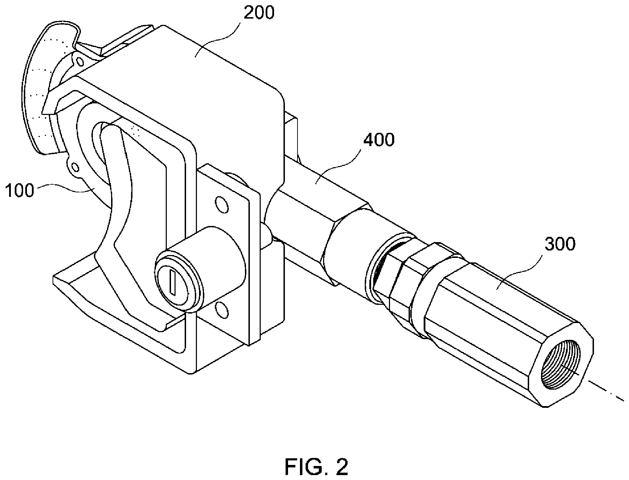

FIG. 2 zeigt das erfindungsgemäße System aus FIG. 1, wobei der Kupplungskopf 100 und die Blockiereinrichtung 200 durch das zuvor erwähnt Schloss miteinander verbunden sind. In die Blockiereinrichtung ist eine halbkreisförmige Aussparung eingearbeitet, um Platz für das Verlängerungsstück 400, welches mit dem Rückschlagventil 300 verbunden ist, zu schaffen.

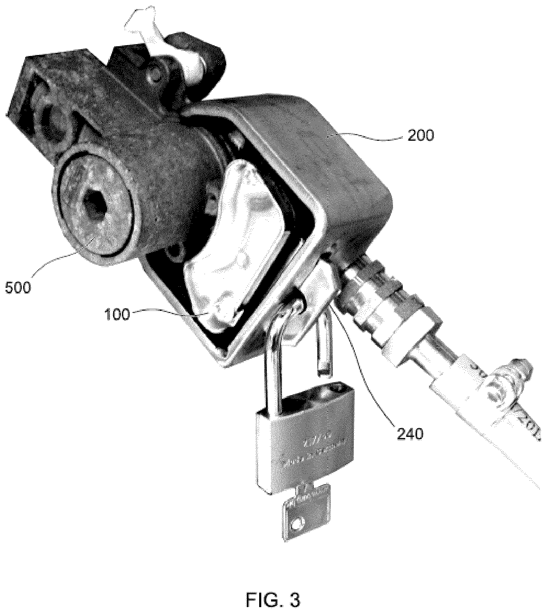

FIG. 3 zeigt eine Fotographie eines erfindungsgemäßen Systems, welches mit dem Gegenkupplungskopf 500 einer Betriebsbremsleitung eines Anhängers (üblicherweise durch die Farbe Gelb gekennzeichnet) zur Durchführung des erfindungsgemäßen Verfahrens fluidisch verbunden ist.

Der über ein Verlängerungsstück mit dem abgebildeten Druckluftschlauch verbundene Kupplungskopf 100 wird auf den Gegenkupplungskopf aufgesetzt und durch eine Drehung mit diesem verrastet. Anschließend wird seitlich die Blockiereinrichtung 200 auf den Verbund von Kupplungskopf 100 und Gegenkupplungskopf 500 aufgesetzt.

Die Blockiereinrichtung umgibt den Kupplungskopf 100 und den Gegenkupplungskopf 500 C-förmig. Auch hier ist ein L-förmiges Gegenstück am Kupplungskopf 100 befestigt. Dessen vorderer Abschnitt 240 ragt durch eine passend dimensionierte Aussparung in der Blockiereinrichtung durch diese hindurch und wird durch das dargestellte Vorhängeschloss abschließbar fixiert. Auf diese Weise wird ein Verschwenken des Kupplungskopfes 100 gegenüber dem Gegenkupplungskopf 500, welches zu einem Ablösen der Verbindung führen würde, verhindert.

Durch diese Anordnung kann dann externe Druckluft auf die Betriebsbremsleitung beaufschlagt werden, wodurch die Betriebsbremse des Anhängers ausgelöst wird.

## Patentansprüche

1. System zum Fixieren eines stehenden Anhängers für eine Zugmaschine,
**dadurch gekennzeichnet, dass** das System umfasst:
- einen Kupplungskopf (100) zur Verbindung einer nicht mit der Zugmaschine verbundenen Druckmittelleitung mit einem Gegenkupplungskopf einer Betriebsbremsleitung des Anhängers;
und
- eine Blockiereinrichtung (200) zum verliersicheren Blockieren des Kupplungskopfes mit dem Gegenkupplungskopf.

2. System gemäß Anspruch 1, wobei der Kupplungskopf mit einer nicht mit der Zugmaschine verbundenen Druckmittelleitung verbunden ist.

3. System gemäß Anspruch 1 oder 2, wobei die Druckmittelleitung eine Druckluftleitung ist.

4. System gemäß einem der Ansprüche 1 bis 3, weiterhin umfassend ein mit dem Kupplungskopf verbundenes Rückschlagventil (300), welches zur Aufnahme der nicht mit der Zugmaschine verbundenen Druckmittelleitung eingerichtet ist.

5. System gemäß einem der Ansprüche 1 bis 4, wobei die Blockiereinrichtung (200) abnehmbar ausgestaltet ist.

6. System gemäß einem der Ansprüche 1 bis 5, wobei die Blockiereinrichtung (200) mit dem System verschließbar ausgestaltet ist.

7. System gemäß einem der Ansprüche 1 bis 6, wobei der Kupplungskopf (100) eingerichtet ist, um durch Drehung um eine Drehachse mit dem Gegenkupplungskopf verbunden zu werden und wobei die Blockiereinrichtung (200) senkrecht zu dieser Drehachse den Kupplungskopf (100) C-förmig umgibt.

8. Verfahren zum Fixieren eines stehenden Anhängers für eine Zugmaschine,
wobei der Anhänger eine durch Beaufschlagen mit einem Druckmittel wirkende Betriebsbremse aufweist,
die Betriebsbremse mit einer Betriebsbremsleitung verbunden ist und
die Betriebsbremsleitung einen Gegenkupplungskopf zur Aufnahme eines Kupplungskopfes aufweist,
**dadurch gekennzeichnet, dass** das Verfahren die Schritte umfasst:
A) Verbinden einer Druckmittelleitung mit der Betriebsbremsleitung des Anhängers,
wobei das Verbinden durch Ankoppeln eines mit der Druckmittelleitung verbundenen Kupplungskopfes an den Gegenkupplungskopf der Betriebsbremsleitung erfolgt und
wobei die Druckmittelleitung nicht mit der Zugmaschine verbunden ist;
B) Beaufschlagen der Betriebsbremsleitung mit einem unter Druck stehenden Fluid,
indem das unter Druck stehende Fluid über die Druckmittelleitung auf die Betriebsbremsleitung einwirkt,
wobei der Druck derart gewählt wird, dass die Betriebsbremse des Anhängers aktiviert wird.

9. Verfahren gemäß Anspruch 8, wobei ein System gemäß einem der Ansprüche 1 bis 7 zumindest für die Schritte A) und B) eingesetzt wird.

10. Verwendung eines Systems gemäß einem der Ansprüche 1 bis 7 zum Fixieren eines stehenden Anhängers für eine Zugmaschine.

## Claims

1. System for fixing a stationary trailer for a tractor,
**characterized in that** the system comprises:
- a coupling head (100) for connecting a pressure medium line not connected to the tractor to a mating coupling head of a service brake line of the trailer;
and
- a blocking device (200) for the captive locking of the coupling head to the mating coupling head.

2. System according to Claim 1, wherein the coupling head is connected to a pressure medium line not connected to the tractor.

3. System according to Claim 1 or 2, wherein the pressure medium line is a compressed air line.

4. System according to one of Claims 1 to 3, further comprising a non-return valve (300) which is connected to the coupling head and which is set up to receive the pressure medium line not connected to the tractor.

5. System according to one of Claims 1 to 4, wherein the blocking device (200) is configured so as to be removable.

6. System according to one of Claims 1 to 5, wherein the blocking device (200) is configured to be lockable to the system.

7. System according to one of Claims 1 to 6, wherein the coupling head (100) is set up to be connected to the mating coupling head by rotation about an axis of rotation, and wherein the blocking device (200) surrounds the coupling head (100) in a C shape at right angles to this axis of rotation.

8. Method for fixing a stationary trailer for a tractor,
wherein the trailer has a service brake acting as a result of application of a pressure medium,
- the service brake is connected to a service brake line and
- the service brake line has a mating coupling head to receive a coupling head,
**characterized in that** the method comprises the steps:
A) connecting a pressure medium line to the service brake line of the trailer,
wherein the connection is made by coupling a coupling head connected to the pressure medium line to the mating coupling head of the service brake line and
wherein the pressure medium line is not connected to the tractor;
B) pressurizing the service brake line with a fluid under pressure,
by the fluid under pressure acting on the service brake line via the pressure medium line,
wherein the pressure is chosen such that the service brake of the trailer is activated.

9. Method according to Claim 8, wherein a system according to one of Claims 1 to 7 is used, at least for steps A) and B).

10. Use of the system according to one of Claims 1 to 7 for fixing a stationary trailer for a tractor.

## Revendications

1. Système d'immobilisation d'une remorque à l'arrêt pour un véhicule tracteur, **caractérisé en ce que** le système comprend :
- une tête de couplage (100) destinée à relier une conduite de fluide sous pression non reliée au véhicule tracteur à une tête de couplage homologue d'une conduite de frein de service de la remorque ;
et
- un dispositif de blocage (200) destiné à bloquer de manière imperdable la tête de couplage avec la tête de couplage homologue.

2. Système selon la revendication 1, la tête de couplage étant reliée à une conduite de fluide sous pression non reliée au véhicule tracteur.

3. Système selon la revendication 1 ou 2, la conduite de fluide sous pression étant une conduite d'air comprimé.

4. Système selon l'une des revendications 1 à 3, comprenant en outre un clapet anti-retour (300) relié à la tête de couplage, lequel est conçu pour accueillir la conduite de fluide sous pression non reliée au véhicule tracteur.

5. Système selon l'une des revendications 1 à 4, le dispositif de blocage (200) étant configuré de manière à être amovible.

6. Système selon l'une des revendications 1 à 5, le dispositif de blocage (200) étant configuré pour pouvoir être fermé avec le système.

7. Système selon l'une des revendications 1 à 6, la tête de couplage (100) étant conçue pour être reliée à la tête de couplage homologue par rotation autour d'un axe de rotation et le dispositif de blocage (200) entourant la tête de couplage (100) en forme de C perpendiculairement à cet axe de rotation.

8. Procédé d'immobilisation d'une remorque à l'arrêt pour un véhicule tracteur,
la remorque possédant un frein de service qui agit par alimentation avec un fluide sous pression,
le frein de service étant relié à une conduite de frein de service et
la conduite de frein de service possédant une tête de couplage homologue destinée à accueillir une tête de couplage,
**caractérisé en ce que** le procédé comprend les étapes suivantes :
A) connexion d'une conduite de fluide sous pression à la conduite de frein de service de la remorque,
la connexion étant réalisée par accouplement d'une tête de couplage reliée à la conduite de fluide sous pression avec la tête de couplage homologue de la conduite de frein de service et
la conduite de fluide sous pression n'étant pas reliée au véhicule tracteur ;
B) alimentation de la conduite de frein de service avec un fluide sous pression,
**en ce que** le fluide sous pression agit sur la conduite de frein de service par le biais de la conduite de fluide sous pression,
la pression étant choisie de telle sorte que le frein de service de la remorque est activé.

9. Procédé selon la revendication 8, un système selon l'une des revendications 1 à 7 étant utilisé au moins pour les étapes A) et B).

10. Utilisation d'un système selon l'une des revendications 1 à 7 pour immobiliser une remorque à l'arrêt pour un véhicule tracteur.
